# EUROPÄISCHE PATENTSCHRIFT

(11) **EP 1 663 662 B1**
(45) Veröffentlichungstag und Bekanntmachung des Hinweises auf die Patenterteilung: **07.05.2008**
(21) Anmeldenummer: 04764765.6
(22) Anmeldetag: 02.09.2004
(51) Int. Cl.: B41M 5/42, B41M 5/44, C09D 4/00

(54) **NICHT WÄSSERIGE ZUSAMMENSETZUNG UND WÄRMEEMPFINDLICHES AUFZEICHNUNGSMATERIAL**
NON-AQUEOUS COMPOSITION AND HEAT-SENSITIVE RECORDING MATERIAL
COMPOSITION NON AQUEUSE ET MATERIAU D'ENREGISTREMENT THERMOSENSIBLE

(30) Priorität: 06.09.2003 DE 10341168
(43) Veröffentlichungstag der Anmeldung: 07.06.2006
(73) Patentinhaber: Mitsubishi HiTec Paper Flensburg GmbH, 24941 Flensburg (DE)
(72) Erfinder: WAGNER, Wolfgang, 24943 Flensburg (DE); CURCIC, Nebojsa, 42107 Wuppertal (DE)
(74) Vertreter: Hiller, Volker
(86) Internationale Anmeldenummer: PCT/EP2004/009807
(87) Internationale Veröffentlichungsnummer: WO 2005/023554

(56) Entgegenhaltungen:
- EP-A- 0 264 827
- EP-A- 0 339 670
- US-A- 4 227 980

## Beschreibung

Die Erfindung betrifft ein wärmeempfindliches Aufzeichnungsmaterial nach vorliegenden Anspruch 1 mit einem Substrat, auf dessen einer Seite eine wärmeempfindliche Aufzeichnungsschicht vorgesehen ist, die mindestens einen Farbstoffvorläufer und mindestens einen Farbakzeptor aufweist, welche unter Einwirkung von Wärme farbbildend miteinander reagieren. Die Aufzeichnungsschicht ist mit einer aufgedruckten und unter Einfluss von energiereicher Strahlung vernetzten Schutzschicht auf der Basis von (Meth)acrylaten abgedeckt.
Im gleichen Maße betrifft die Erfindung die Verwendung des vorgeschlagenen wärmeempfindlichen Aufzeichnungsmaterials als Etikett sowie eine Zusammensetzung, die zur Ausbildung einer Schutzschicht auf eine wärmeempfindliche Aufzeichnungsschicht aufdruckbar ist.

Ein gattungsgemäßes Aufzeichnungsmaterial ist den Ausführungen der EP 0 832 757 B1 zu entnehmen, wo die Aufzeichnungsschicht eines reversiblen wärmeempfindlichen Aufzeichnungsmaterials vorzugsweise mit einer Deckschicht beaufschlagt ist, die neben Photoinitiatoren und Wachs als Hauptkomponente ein durch Elektronen- oder UV-Strahlen härtbares Polymermaterial umfasst. Dabei wird eine Vielzahl von organischen ungesättigten Verbindungen, unter anderem auch Acrylate wie Dipentaerythritolpentaacrylat, ohne Würdigung ihrer tatsächlichen Eignung, als mögliche Materialien offenbart. Beispielhaft wird ihre Aufbringung auf die fertig ausgebildete Aufzeichnungsschicht mittels Offsetdruck erwähnt. Eine Erklärung für diese nur am Rande offenbarte, mit den sonstigen Ausführungen der Schrift nicht in Beziehung stehende Aufbringungsmethode ist der Schrift genauso wenig zu entnehmen wie eine nacharbeitbare Lehre für die quantitative Zusammensetzung der Schutzschicht. Diese kann unter Umständen auch Silikonverbindungen aufweisen, wobei jedoch die Ausbildung der Schutzschicht als Releaseschicht genauso wenig nahegelegt wird wie die Aufbringung einer separaten Releaseschicht oberhalb der Schutzschicht.

Aus dem Stand der Technik ist ferner die Verwendung eines wärmeempfindlichen Aufzeichnungsmaterials mit einem Schichtträger, einer vorderseitig aufgetragenen wärmeempfindlichen Aufzeichnungsschicht und einer die Aufzeichnungsschicht abdeckenden, mittels aktinischer Strahlung gehärteten und von silikonhaltigen Komponenten freien Schutzschicht aus der WO 99/42298 A1 bekannt. Rückseitig trägt der dort vorgeschlagene Schichtträger eine Selbstklebeschicht. Wird das bekannte wärmeempfindliche Aufzeichnungsmaterial aufgerollt, kommen Selbstklebeschicht und gehärtete Schutzschicht in direkten Kontakt. Die gehärtete Schutzschicht des bekannten wärmeempfindlichen Aufzeichnungsmaterials verhindert ein Verkleben der einzelnen Lagen innerhalb der Rolle, ohne dass ein Releasepapier zum Einsatz kommen muss. Gleichzeitig ist die Schutzschicht des seit Jahren bewährten wärmeempfindlichen Aufzeichnungsmaterials im Offset gut bedruckbar. In dieser Schrift finden sich keinerlei Hinweise auf die verwendeten Verfahren zum Auftrag der Schutzschicht.

Einem Vorschlag der WO 93/25393 A1 zufolge ist auf der Aufzeichnungsschicht eines wärmeempfindlichen Aufzeichnungsmaterials eine UV-schützende Primerschicht gegebenenfalls mittels Flexodruck aufgetragen und konventionell durch Wärmezufuhr getrocknet. Dieser ersten Primerschicht folgt eine weitere Beschichtung, die mittels Strahlung vernetzt ist. Ein Druckauftrag kann optional unterhalb der Primerschicht oder der weiteren Beschichtung aufgebracht sein. Eine Auftragung der auf die Primerschicht aufgebrachten weiteren Beschichtung innerhalb eines Druckvorgangs kann der Schrift jedoch an keiner Stelle entnommen werden.

Auch der EP 0 339 670 A2 ist ein Vorschlag für ein wärmeempfindliches Aufzeichnungsmaterial zu entnehmen, auf dessen Aufzeichnungsschicht eine, ein wasserlösliches oder wasserdispergierbares Harz als Hauptkomponente enthaltende Zwischenschicht und darauf eine Schutzschicht ausgebildet sind. Die Schutzschicht enthält ein mit Elektronenstrahlen härtbares Harz und ein Makromonomer mit einer Molekülkette, deren Hauptkomponente Organopolysiloxan ist und die an ihrem einen Ende eine polymerisierbare funktionelle Gruppe umfasst. Das aus jener Schrift bekannte wärmeempfindliche Aufzeichnungsmaterial, das rückseitig noch eine Selbstklebeschicht aufweisen kann, soll eine verbesserte Beständigkeit gegenüber Fingerabdrücken und Lösungsmitteln aufweisen, so dass eine ohne die Schutzschicht zu beobachtende Verringerung der Aufzeichnungsdichte oder Hintergrundvergrauung bereits entwickelter Druckbilder bei Exposition der Aufzeichnungsschicht mit Fingerabdrücken und Lösungsmitteln verhindert werden kann. Während die Zwischenschicht offenbarungsgemäß konventionell gestrichen und konventionell getrocknet bzw. auch strahlungsgehärtet wird, ist der Schrift darüber hinaus keinerlei Hinweis auf eine Auftragung der Schutzschicht mittels Druckverfahren zu entnehmen.

Schließlich ist aus der EP 0 747 871 A2 ein Etikett mit einer frontseitig aufgetragenen wahlweise druck- oder wärmeempfindlichen Aufzeichnungsschicht, einer sie abdeckenden Basisschicht und einem auf die Basisschicht aufgestrichenen Releasematerial, das Polymere auf Silikonbasis und auf Acrylatbasis enthält, bekannt. Aufgabengemäß benötigt dieses Etikett kein separates, die rückseitig aufgebrachte Selbstklebeschicht abdeckendes Releasepapier, um in der Rolle aufgewickelt zu werden. Während die Aufzeichnungsschicht aufgedruckt sein kann, fehlt der Schrift jeglicher Hinweis darauf, dass die Aufbringung der Basisschicht sowie des Releasematerials in einem Druckverfahren erfolgen kann. Eine nachzuarbeitende vollständige Zusammensetzung der einzelnen Schichten mit all ihren wesentlichen Komponenten ist der Schrift weiterhin nicht zu entnehmen.

Durch immer neue Anwendungen für wärmeempfindliche Aufzeichnungsmaterialien, verbunden mit ihrer Ausgestaltung in immer spezielleren Sorten, wächst gleichzeitig die Zahl an unterschiedlichen Schutzschichten, die jeweils auf die Aufzeichnungsschichten dieser wärmeempfindlichen Aufzeichnungsmaterialien aufzutragen sind. Verfahrenstechnisch bedeutet das, dass eine immer weiter zunehmende Zahl unterschiedlicher Zusammensetzungen zur Herstellung von Schutzschichten innerhalb des Produktionsprozesses vorzuhalten sind, die dabei das Problem aufweisen können, nicht lagerfähig zu sein und nach kürzerer Zeit unbrauchbar werden. Insbesondere aber bedeuten unterschiedliche Sorten lange Rüstzeiten in den Beschichtungseinrichtungen u.a. durch aufwendige Spülprozesse der Aufbereitungsaggregate und der Beschichtungsköpfe, was eine signifikante Reduzierung der Flexibilität und der Rentabilität innerhalb des Produktionsprozesses bedeutet. Gleichzeitig stellen die aufwendigen Spülprozesse eine Umweltbelastung durch die zu entsorgenden Spülabwässer dar.

Den bis hierher gewürdigten Schriften ist gemeinsam zu entnehmen, dass auf ein zuvor hergestelltes Substrat die wärmeempfindliche Aufzeichnungsschicht mittels konventioneller Beschichtungseinrichtungen oder in einem Fall sogar mit einem Druckwerk aufgetragen wird. Für die den Aufzeichnungsschichten folgenden Schutzschichten sind zu ihrem Auftrag konventionelle Beschichtungseinrichtungen, wie sie Streichmesser-, Rollrakel-, Curtain- und Sprüh-Coater darstellen, - sofern offenbart - noch üblich, doch auch hier ist mitunter der drucktechnische Auftrag nicht ausgeschlossen. In diesem Sinne offenbart auch die DE 201 17 479 U1 eine Schutzschicht aus UV-härtbarem Material mit Acrylaten bzw. Acrylsäureestern, die überdies bevorzugt transparente Füllstoffe umfasst. Wässerige Zusammensetzungen zur Ausbildung von Druckfarben sind zudem durch die WO 02/081 576 A1 und die EP 0 209 684 B1 bekannt. Aus der WO 85/04842 A1 ist ein Aufzeichnungsmedium bekannt mit einem flächenförmigen Material als Grundkörper, der zumindest einseitig eine wärmeempfindliche Aufzeichnungsschicht trägt, die mit einem unter UV-Bestrahlung aushärtbaren Acrylpolymerisat-Lack abgedeckt ist. Als Grundkörper werden Kunststofffolien beansprucht und zusätzlich synthetische Papiere offenbart. Die Kombination silikonhaltiger und silikonfreier Schutzschichten in welcher Reihenfolge auch immer, insbesondere zur Ausbildung von Trennschichten, wird in diesen Schriften jedoch nicht nahegelegt.

Neben der bereits erwähnten erhöhten Flexibilität ist es ein weiterer Vorteil des drucktechnischen Auftrags einer Schutzschicht auf eine wärmeempfindliche Aufzeichnungsschicht, dass die Schutzschicht im ersten und/oder zweiten Druckwerk einer Flexodruckmaschine geschieht. In den folgenden Druckwerken der so genutzten Flexodruckmaschine kann das wärmeempfindliche Aufzeichnungsmaterial Inline mit Buntfarben fertigbedruckt und -konfektioniert werden.

Die derzeit aus dem Stand der Technik bekannten wärmeempfindlichen und mit einer - auch aufgedruckten - Schutzschicht versehenen Aufzeichnungsmaterialien können jedoch gerade hinsichtlich ihrer Bedruckung nicht immer überzeugen. Die oft abrasiven Pigmente der Bedruckung zur Darstellung von Text wie von Bildern gefährden die Thermodruckköpfe und können so, falls es zur Zerstörung der Thermodruckköpfe durch zu abrasiv gestaltetes Aufzeichnungsmaterial kommt, Gegenstand kostenintensiver Gewährleistungsprozesse werden. Fluoreszierende Pigmente können durch die von Thermodruckköpfen emittierte Hitze zerstört werden, so dass ihr Einsatz auf wärmempfindlichen Aufzeichnungsmaterialien als authentifikationsnachweisende Sicherheitsmerkmale nicht uneingeschränkt möglich ist. Auch mussten immer wieder Abschäleffekte aufgebrachter Druckbilder gerade bei als Selbstklebeetiketten eingesetzten wärmeempfindlichen Aufzeichnungsmaterialien beobachtet werden.

Die üblicherweise eingesetzten Druckfarben zur Ausbildung einer Schutzschicht basieren auf radikalisch polymerisierbaren olefinisch ungesättigten Bindemitteln, wie: Oligomere, Prepolymere oder Polymere wie (meth)acrylfunktionelle (Meth)acrylpolymere, Epoxidharz(meth)acrylate, Polyester(meth)acrylate, Polyether(meth)acrylate, Urethan(meth)acrylate, Amin(meth)acrylate, ungesättigte Polyester, ungesättigte Polyurethane, Silikon(meth)acrylate und Kombinationen davon. Nachteilig an diesen Zusammensetzungen ist, dass sie die aus umwelt- und gesundheitsorientierter Sicht bedenklichen ungesättigten, zum Beispiel vinylisch oder allylisch ungesättigten Monomere enthalten. Beispiele für solche Monomere sind: Vinyltoluol, Styrol und Styrolderivat.

Allgemein kann die Verwendung von Reaktiwerdünnern während der Härtung durch Verdampfen der Monomerverbindungen zu gesundheitlichen Problemen führen. Speziell bei der Verwendung der Reaktiwerdünner in auf wärmeempfindliche Auf zeichnungsschichten aufzubringenden Schutzschichten können darüber hinaus Probleme bei der Haftung der einzelnen Schutzschichten auf der jeweiligen wärmeempfindlichen Aufzeichnungsschicht auftreten.

So ist ein erster Aufgabenaspekt der vorliegenden Erfindung, ein wärmeempfindliches Aufzeichnungsmaterial mit einer wärmeempfindlichen Aufzeichnungsschicht und einer darauf aufgedruckten und unter Einfluss von UV Strahlung vernetzten Schutzschicht zur Verfügung zu stellen, die eine drucktechnische Verarbeitung der Schutzschicht ohne gesundheitliche Risiken ermöglicht. Das neue Aufzeichnungsmaterial soll eine gute Lagenhaftung aufweisen, so dass unerwünschte Spalterscheinungen, das bedeutet, ein Abspalten der aufgedruckten Schutzschicht vom Substrat mit der Aufzeichnungsschicht, vermieden werden. Auch soll das neue Aufzeichnungsmaterial einen verbesserten Schutz von für das Aufzeichnungsmaterial vorgesehenen Aufdrucken beispielsweise in Form von verzierenden, authentifikationsnachweisenden oder Informationen enthaltenden Druckbildern ermöglichen.

Besonders angestrebt bei der vorliegenden Erfindung ist es, ein wärmeempfindliches Aufzeichnungsmaterial mit einer aufgedruckten und unter Einfluss von UV-Strahlung vernetzten Schutzschicht zur Verfügung zu stellen, bei der auf die sonst üblichen, nach der deutschen Gefahrstoffverordnung (GefStoffV) kennzeichnungspflichtigen Bestandteile komplett verzichtet wird, so dass das wärmeempfindliche Aufzeichnungsmaterial für einen Kontakt und Einsatz im Lebensmittelbereich im besonderen Maße geeignet ist.

Ein zweiter Aufgabenaspekt der vorliegenden Erfindung ist es, eine Zusammensetzung für eine Schutzschicht vorzuschlagen, die auf eine wärmeempfindliche Aufzeichnungsschicht im Flexodruckverfahren aufdruckbar und unter Einfluss von UV-Strahlung vernetzbar ist, wobei sich die Zusammensetzung durch ausgezeichnete Verarbeitungsqualitäten auszeichnen soll, worunter ein gutes Haftungsvermögen der Schutzschicht ausbildenden Zusammensetzung zur wärmeempfindlichen Aufzeichnungsschicht genauso gehört wie eine drucktechnische Verarbeitung der Zusammensetzung ohne gesundheitliche Risiken.

Die Erfinder erkannten nach intensiven Forschungsarbeiten, daß der erste Aufgabenaspekt erfüllt werden kann durch ein wärmeempfindliches Aufzeichnungsmaterial mit
- einem Substrat, das eine erste Seite und eine ihr gegenüberliegende zweite Seite aufweist,
- einer auf der ersten Seite des Substrats gelegenen wärmeempfindlichen Aufzeichnungsschicht, die mindestens einen Farbstoffvorläufer und mindestens einen Farbakzeptor aufweist, wobei Farbstoffvorläufer und Farbakzeptor unter Einwirkung von Wärme farbbildend miteinander reagieren,
- einer die Aufzeichnungsschicht abdeckenden, aufgedruckten, vernetzbaren und unter Einfluss von energiereicher Strahlung vernetzten Schutzschicht auf der Basis von (Meth)acrylaten,
wobei
- die Schutzschicht
   ■ zu 65 bis 95 Gew.-% ein oder mehrere (Meth)acrylate, ausgewählt aus der Gruppe umfassend Polyether(meth)acrylat, Epoxy(meth)acrylat sowie Urethan(meth)acrylat,
   ■ zu 0 bis 20 Gew.-% Photoinitiatoren und
   ■ zu 0,5 bis 20 Gew.% Wachs
   enthält, wobei mindestens ein (Meth)acrylat der genannten Gruppe ein aminmodifiziertes (Meth)acrylat ist und wobei sich die Gew.%-Angaben zu 65,5 bis 100 Gew.-% der Schutzschicht addieren,
- die Schutzschicht aus einer nicht wässerigen Phase aufgedruckt ist,
- zwischen der Aufzeichnungsschicht und der Schutzschicht und/oder bei einer mehrlagig ausgeführten Schutzschicht zwischen den mindestens zwei Lagen der Schutzschicht mindestens eine pigmenthaltige Druckschicht aufgetragen ist.

Zur Vernetzung der Schutzschicht bieten sich insbesondere UV- und Elektronenstrahlung an, wobei UV-Strahlung besonders bevorzugt ist. In diesem Fall enthält die Schutzschicht Photoinitiatoren in einem Bereich von 2 bis 20 Gew.-% und die Gew.-%-Angaben für die ein oder mehrere (Meth)acrylate, Photoinitiatoren und Wachs addieren sich zu 67,5 bis 100 Gew.-% der Schutzschicht.

Bevorzugt ist die Schutzschicht mittels Analogdruck aufgedruckt. Dabei werden als Analogdruck im Sinne dieser Erfindung alle Druckverfahren bezeichnet, die mit Druckplatte bzw. -zylinder arbeiten, wozu Tiefdruck, Siebdruck, Offsetdruck und in einer ganz besonders bevorzugten Ausführung Flexodruck gehört.

Zur Erfüllung des zweiten Aufgabenaspektes wird eine nicht wässerige Zusammensetzung für eine auf eine wärmeempfindliche Aufzeichnungsschicht aufdruckbare und durch energiereiche Strahlung vernetzbare Schutzschicht vorgeschlagen, die
- 65 bis 95 Gew.-% ein oder mehrere (Meth)acrylate ausgewählt aus der Gruppe umfassend: Polyether(meth)acrylat, Epoxy(meth)acrylat und Urethan(meth)acrylat,
- 0 bis 20 Gew.-% Photoinitiatoren und
- 0,5 bis 20 Gew.-% Wachs
enthält, wobei mindestens ein (Meth)acrylat der genannten Gruppe ein aminmodifiziertes (Meth)acrylat ist und wobei sich die Gew.-%-Angaben zu 65,5 bis 100 Gew.-% der Zusammensetzung addieren. Die so vorgeschlagene nicht wässerige Zusammensetzung zur Erfüllung des zweiten Aufgabenaspektes soll somit identisch sein mit der Zusammensetzung zur Ausbildung der Schutzschicht für ein wärmeempfindliches Auf zeichnungsmaterial, das in einer ersten Ausführungsform oben bereits zur Erfüllung des ersten Aufgabenaspektes vorgeschlagen wurde.

Die Zusammensetzung ist bevorzugt mittels Analogdruck aufdruckbar. Zur Vernetzung der auf eine wärmeempfindliche Aufzeichnungsschicht als Schutzschicht aufdruckbaren Zusammensetzung bieten sich insbesondere UV- und Elektronenstrahlung an, wobei UV-Strahlung besonders bevorzugt ist. In diesem Fall enthält die Zusammensetzung Photoinitiatoren in einem Bereich von 2 bis 20 Gew.-% und die Gew.-%-Angaben für die ein oder mehrere (Meth)acrylate, Photoinitiatoren und Wachs addieren sich zu 67,5 bis 100 Gew.-% der Schutzschicht.

Die erfindungsgemäße Zusammensetzung für die Schutzschicht ist vorzugsweise nahezu frei von Monomeren bzw. Reaktivverdünnern und weist vorzugsweise einen niedrigen Restgehalt an (Meth)acrylsäure auf. Zu ihrem Auftrag ist ein Flexodruckwerk beispielsweise innerhalb einer Flexodruckmaschine vorgesehen. Die anschließende Vernetzung erfolgt unter UV-Bestrahlung.

Beispiele für die (Meth)acrylate gemäß der vorgeschlagenen Schutzschicht bzw. Zusammensetzung für die Schutzschicht sind Dipentaerythritolpenta(meth)acrylat und finden sich beispielsweise in den Literaturstellen US 4,485,123 und EP 0 209 684 A1. Als aminmodifiziertes (Meth)acrylat wird bevorzugt aminmodifiziertes Polyetheracrylat eingesetzt.

Als Photoinitiatoren können solche eingesetzt werden, welche die Härtung bzw. radikalische Polymerisation unter Anwendung von UV-Strahlung initiieren und beispielsweise im Wellenbereich von 190 bis 400 nm absorbieren. Derartige Photoinitiatoren sind beispielsweise chlorhaltige Photoinitiatoren, aromatische Ketone, Hydro-Xyalkylphenone, Phosphinoxide. Bevorzugte Photoinitiatoren sind Benzophenonderivate, Phenylketone und Phenyolphosphenate.

Als Wachse sind bspw. Polyethylenwachse, wie beispielsweise PTFE-modifiziertes Polyethylenwachs verwendbar.

In einer bevorzugten Ausführungsform besteht die Schutzschicht aus mindestens zwei Auftragsebenen, von denen die erste Auftragsebene der Aufzeichnungsschicht zugewandt ist, während die zweite Auftragsebene der Schutzschicht der Aufzeichnungsschicht abgewandt ist. Dabei besteht in einer Ausführungsform mindestens diese zweite Auftragsebene aus einer Zusammensetzung, die
- 65 bis 95 Gew.-% ein oder mehrere (Meth)acrylate ausgewählt aus der Gruppe umfassend Polyether(meth)acrylat, Epoxy(meth)acrylat und Urethan(meth)acrylat,
- 2 bis 20 Gew.-% Photoinitiatoren und
- 0,5 bis 20 Gew.-% Wachs
aufweist, wobei mindestens ein (Meth)acrylat der genannten Gruppe ein aminmodifiziertes (Meth)acrylat ist und wobei sich die Gew.-%-Angaben zu 65,5 bis 100 Gew.-% der Zusammensetzung addieren. Die zur Aufzeichnungsschicht hin orientierte erste Auftragsebene der Schutzschicht kann mit einer konventionellen Beschichtungsvorrichtung aufgetragen sein, das ausgewählt ist aus der Gruppe, umfassend Leimpresse, Streichmesser-, Rollrakel-, Curtain- und Sprüh-Coater. Bevorzugt ist jedoch die drucktechnische Auftragung der ersten Auftragsebene der Schutzschicht. Die Auftragung der mindestens zweiten, der Aufzeichnungsschicht abgewandten Auftragsebene der Schutzschicht geschieht erfindungsgemäß mittels Druckwerk.

Bevorzugt wird die Schutzschicht bei der Ausführungsform mit einer Auftragsebene mit einer flächenbezogenen Masse in einem Bereich von 0,5 bis 4,5 g/m² aufgetragen. Bei zwei Auftragsebenen liegt die flächenbezogene Masse der gesamten Schutzschicht bevorzugt in einem Bereich von 1,2 bis 6 g/m² und besonders zwischen 1,5 und 4 g/m².

Es ist bevorzugt, wenn die Schutzschicht bei der Ausführungsform mit einer Auftragungsebene vollflächig auf die wärmeempfindliche Aufzeichnungsschicht aufgebracht ist und diese so vollständig überdeckt. Liegt die Schutzschicht in mindestens zwei Auftragsebenen vor, deckt bevorzugt mindestens eine Auftragsebene der Schutzschicht die wärmeempfindliche Aufzeichnungsschicht vollflächig ab. So ist es insbesondere möglich, besonders empfindliche oder besonders stark beanspruchte Bereiche des wärmeempfindlichen Aufzeichnungsmaterials mit mindestens zwei Schutzschicht-Auftragsebenen zu bedecken. Insbesondere wird vorgeschlagen,
□ nur die mit der pigmenthaftigen Druckschicht versehenen Bereiche mit zwei Schutzschicht-Auftragsebenen zu bedecken; in diesem Fall kann die pigmenthaltige Druckschicht direkt auf die Aufzeichnungsschicht aufgebracht sein: die erste Auf tragsebene der Schutzschicht deckt die mit der pigmenthaltigen Druckschicht versehenen Beeiche ab, während die zweite Auftragsebene der Schutzschicht vollflächig aufgetragen ist.
□ die erste Auftragsebene der Schutzschicht nur auf den Bereichen der Aufzeichnungsschicht aufzutragen, auf die anschließend die Bereiche der pigmenthaltigen Druckschicht aufgetragen werden; die zweite Auftragsebene der Schutzschicht wird vollflächig ausgebildet zur vollständigen Abdeckung der unter ihr liegenden Schichten.
□ die erste Auftragsebene der Schutzschicht zur vollständigen Abdeckung der unter ihr liegenden Aufzeichnungsschicht vollflächig auszubilden zur vollständigen Abdeckung der unter ihr liegenden Aufzeichnungsschicht; nur die darauf aufgetragenen Bereiche der pigmenthaltigen Druckschicht werden durch die zweite Auftragsebene der Schutzschicht abgedeckt.
Durch die beiden zuletzt vorgeschlagenen Varianten ist es möglich, solche Komponenten in der pigmenthaltigen Druckschicht vorzusehen, die nicht mit der wärmeempfindlichen Aufzeichnungsschicht harmonisieren und gegebenenfalls zu Verfärbungen bzw. Entfärbungen in der wärmeempfindlichen Aufzeichnungsschicht führen können.

Nach Applikation der Schutzschicht bzw. nach Applikation einer Auftragsebene der Schutzschicht erfolgt, gegebenenfalls nach einer kurzen Ablüftphase, die Bestrahlung mit energiereicher Strahlung, bevorzugt mit UV-Strahlung. Als Strahlungsquelle werden bevorzugt UV-Strahlungsquellen mit Emissionen im Wellenlängenbereich von 180 bis 420 nm, insbesondere von 200 bis 400 nm eingesetzt. Beispiele für derartige UV-Strahlungsquellen sind gegebenenfalls dotierte Quecksilberhochdruck-, -mitteldruck- und -niederdruckstrahler, Gasentladungsröhren, wie beispielsweise. Xenonniederdrucklampen, UV-Laser, UV-Punktstrahler, wie beispielsweise UVemittierende Dioden und Schwarzlichtröhren.

Die pigmenthaltige Druckschicht enthält in einer möglichen Ausführungsvariante fluoreszierende Pigmente als authentifikationsnachweisendes Sicherheitsmerkmal. Diese fluoreszierenden Pigmente werden durch die Schutzschicht bzw. mindestens eine Lage der Schutzschicht während des Thermodruckprozesses vor einem direkten Kontakt mit dem Thermodruckkopf geschützt. Ein solcher Kontakt könnte anderenfalls die Wirkung der fluoreszierenden Pigmente reduzieren oder zerstören. Erst durch den erfindungsgemäßen Aufbau des hier vorgeschlagenen Aufzeichnungsmaterials ist der uneingeschränkte Einsatz der fluoreszierenden Pigmente möglich.

Die pigmenthaltige Druckschicht enthält in einer alternativen Ausführungsvariante farbige Pigmente wie beispielsweise Eisenoxidpigmente, Chromoxidpigmente, Azopigmente, Phthalocyaninpigmente und/oder Weißpigmente wie beispielsweise Titan(di)oxid. Solche Pigmente können stark abrasiv sein und bei einem direkten Kontakt mit dem Thermodruckkopf diesen nachhaltig schädigen oder zerstören. Durch die Abdeckung der pigmenthaftigen Druckschicht mit der Schutzschicht bzw. mindestens einer Lage der Schutzschicht wird der Thermodruckkopf von den abrasiven Pigmenten ferngehalten, weshalb deren uneingeschränkter Einsatz in der pigmenthaltigen Druckschicht ermöglicht wird.

In einer weiteren Ausführungsvariante des hier vorgeschlagenen wärmeempfindlichen Aufzeichnungsmaterials sind sowohl eine pigmenthaltige Druckschicht mit fluoreszierenden Pigmenten wie auch eine pigmenthaltige Druckschicht mit farbigen Pigmenten vorgesehen. Die beiden pigmenthaltigen Druckschichten können
□ beide direkt auf die Aufzeichnungsschicht aufgebracht sein und anschließend mit mindestens einer Auftragungsebene der Schutzschicht abgedeckt sein.
□ mit einer Auftragungsebene der Schutzschicht voneinander und/oder von der Aufzeichnungsschicht getrennt und anschließend mit mindestens einer weiteren Auftragungsebene der Schutzschicht abgedeckt sein; in diesem Fall kann die Schutzschicht auch drei Auftragungsebenen umfassen: die erste Auftragungsebene ist zwischen Aufzeichnungsschicht und erster pigmenthaltiger Druckschicht beispielsweise mit den fluoreszierenden Pigmenten positioniert, die zweite Auftragungsebene liegt zwischen erster pigmenthaltiger und zweiter pigmenthaltiger Druckschicht beispielsweise mit den farbigen Pigmenten, die dritte Auftragungsebene der Schutzschicht deckt die zweite pigmenthaltige Druckschicht ab.

Die Ausbildung einer die wärmeempfindliche Aufzeichnungsschicht abdeckenden, gegebenenfalls mehrlagig ausgeführten Schutzschicht sowie der mindestens einen pigmenthaltigen Druckschicht lässt die Entfernung zwischen der wärmeempfindlichen Aufzeichnungsschicht und dem das Druckbild hervorrufenden Thermokopf eines Thermodruckers anwachsen. Mit größer werdender Entfernung zwischen Aufzeichnungsschicht und Thermokopf wird zwangsläufig die Auflösung schlechter, wobei sich die Auflösung etwa umgekehrt proportional zum Quadrat der Entfernung zwischen Aufzeichnungsschicht und Thermokopf verhält. Einer wärmeempfindlichen Aufzeichnungsschicht, die diesem physikalischen Effekt wirkungsvoll entgegenwirkt, in dem sie eine optimierte Auflösung sowie eine besonders gute Druckdynamik, das bedeutet, ein schnelles Ansprechen auch schon auf geringe Hitzeeinwirkung, garantiert, kommt vor diesem Hintergrund eine besondere Bedeutung zu. Grundsätzlich kann die wärmeempfindliche Aufzeichnungsschicht alle bekannten Farbbildner sowie dazu im Einzelnen passende Farbakzeptoren, insbesondere organische Farbakzeptoren beinhalten. Besonders bevorzugt jedoch sind Farbbildner ausgewählt aus der Gruppe der Fluoranverbindungen, und dazu im einzelnen passende organische Farbakzeptoren ausgewählt aus der Gruppe umfassend
- 2,2 bis (4-hydroxyphenyl)-propane,
- 4-[(4-(1-methylethoxy)phenyl)sulfonyl]phenole,
- 4,4'-Dihydroxy-Diphenylsulfone,
- N-(p-toluensulphonyl)-N'-(3-p-toluensulphonyl-Oxy-phenyl)-hamstoffe,
- 2,4'-Dihydroxy-Diphenylsulfone,
- N-(2-hydroxyphenyl)-2-[(4-hydroxyphenyl)thio]Acetamide,
freilich ohne auf die genannten Farbakzeptoren beschränkt zu sein. Für die Farbbildner empfiehlt sich eine mittlere Teilchengröße in einem Bereich von größer 0,3 µm bis maximal 1 µm, insbesondere von 0,45 µm bis 0,9 µm. Die Grenzen werden nach oben durch eine zu geringe Empfindlichkeit und nach unten durch eine sonst zu starke Neigung des wärmeempfindlichen Aufzeichnungsmaterials zur Vergrauung vorgegeben.

Als Beschichtungsvorrichtung zum Auftrag der wärmeempfindlichen Aufzeichnungsschicht bieten sich insbesondere Rollrakelstreichwerk, Messerstreichwerk, Curtain-Coater oder Luftbürste an. Entsprechend einer bevorzugten Ausführungsform ist die zur Ausbildung der Aufzeichnungsschicht genutzte Beschichtungsmasse wässerig. Die anschließende Trocknung der Beschichtungsmasse kann mittels Mikrowellenbestrahlung geschehen. Üblicherweise und bewährt ist ein Verfahren, bei dem Wärme zugeführt wird, wie es durch Heißluft-Schwebetrockner oder auch Kontakttrockner geschieht. Auch denkbar ist eine Kombination aus den aufgeführten Trockenverfahren. Die flächenbezogene Masse der wärmeempfindlichen Aufzeichnungsschicht liegt bevorzugt zwischen 2 und 6 g/m² und noch besser zwischen 2,3 und 5,8 g/m².

Eine zwischen Substrat und wärmeempfindlicher Aufzeichnungsschicht positionierte pigmenthaltige Zwischenschicht kann das Ansprechverhalten der Aufzeichnungsschicht auf zugeführte Wärme durch den Thermodruckkopf weiterhin positiv beeinflussen, weshalb eine solche Zwischenschicht in einem besonderen Maße bevorzugt ist. Werden in die Zwischenschicht neben anorganischen Pigmenten auch organische, so genannte Hohlkörperpigmente, die in ihrem Inneren Luft aufweisen und folglich einen guten Wärmeisolator darstellen, eingebunden, wirkt eine solche Zwischenschicht wie eine Wärmereflektor, der die vom Thermokopf emittierte Hitze, welche die Aufzeichnungsschicht und zuvor die sie abdeckenden Schutz- und Druckschichten durchdringt, auf die wärmeempfindliche Aufzeichnungsschicht fokussiert. Neben einer Erhöhung des Ansprechverhaltens lässt sich so auch das Auflösungsvermögen der wärmeempfindlichen Aufzeichnungsschicht erhöhen.

Die organischen Pigmente der Zwischenschicht weisen eine Wandung aus thermoplastischem Harz auf, der bevorzugt (Meth)Acrylnitril-Copolymer, Polyvinylchlorid, Polyvinylidenchlorid, Polystyrol, Styrolacrylat, Polyacrylnitril oder Polyacrylsäureester umfasst. Pigmentmischungen aus unterschiedlichen organischen Pigmenten sind vorstellbar.

Die als bevorzugte Ausführungsform angesehene Zwischenschicht kann ferner einen positiven Beitrag zur Egalisierung der Substratoberfläche leisten, womit sich die Menge an notwendigerweise aufzubringender Beschichtungsmasse für die wärmeempfindliche Aufzeichnungsschicht reduziert. Aus diesem Grund bieten sich zum Auf trag der Zwischenschicht egalisierende Beschichtungsvorrichtungen an, wie beispielsweise Walzenstreichwerke, Streichmesser- oder (Roll-) Rakelstreichwerke. Werden als anorganische Pigmente ölabsorbierende Pigmente in der Zwischenschicht eingebunden, können sie die durch Hitzeeinwirkung des Thermokopfes verflüssigten Wachsbestandteile der wärmeempfindlichen Aufzeichnungsschicht bei der Schriftbildausbildung aufnehmen und begünstigen damit eine noch sichere und schnelle Funktionsweise der wärmeinduzierten Aufzeichnung, was wegen der energieabsorbierenden, die Aufzeichnungsschicht abdeckenden Schutz- und Druckschichten - wie bereits ausgeführt - von besonderer Bedeutung ist.

Als anorganische Pigmente der Zwischenschicht haben sich bevorzugt solche bewährt, ausgewählt aus der Gruppe, umfassend natürliches wie kalziniertes Kaolin, Siliziumoxid, Bentonit, Kalziumkarbonat sowie Aluminiumoxid und hier besonders Böhmit. Auch Mischungen aus mehreren verschiedenartigen anorganischen Pigmenten sind vorstellbar.

Das Mengenverhältnis zwischen organischem und anorganischem, ölabsorbierendem Pigment ist ein Kompromiss der von den beiden Pigmentarten bewirkten Effekte, der besonders vorteilhaft gelöst wird, wenn die Pigmentmischung zu 15 bis 50 Gew.-%, noch besser zu 25 bis 40 Gew.-%, aus organischem und zu 85 bis 50 Gew.-% und noch besser zu 75 bis 60 Gew.-% aus anorganischem Pigment besteht.

Die als D₅₀-Wert bestimmte Teilchengröße der in der Zwischenschicht vorliegenden organischen Pigmente liegen in einem Bereich von 0,75 µm bis kleiner 1,5 µm, bevorzugt in einem Bereich von 0,8 µm bis 1,1 µm. Teilchengrößen unterhalb von 0,75 µm verbieten sich auf Grund rheologischer Verarbeitungsschwierigkeiten. Teilchengrößen oberhalb von 1,5 µm zeigen ein zu grobkörniges Verhalten und verhindern eine bevorzugte egalisierende Wirkung der Zwischenschicht. Für die anorganischen Pigmente ist die Teilchengröße idealerweise kleiner 2 µm, bestimmt alsD₅₀-Wert. Als vorteilhaft haben sich Pigmente erwiesen, bei denen eine Teilchengrößenverteilung von 34 bis 40 Gew.-% kleiner 1 µm und 57 bis 63 Gew.-% kleiner 2 µm vorliegt.

Die flächenbezogene Masse der pigmentierten Zwischenschicht liegt bevorzugt zwischen 5 und 20 g/m² und noch besser zwischen 6 und 10 g/m².

Auch wenn nicht auf Papier als Substrat beschränkt, ist Papier und hier speziell ein nicht oberflächenbehandeltes Streichrohpapier das Substrat, das sich am Markt auch mit Blick auf die gute Umweltverträglichkeit wegen der guten Recyclingfähigkeit durchgesetzt hat und das im Sinne der Erfindung bevorzugt ist. Unter einem nicht oberflächenbehandelten Streichrohpapier ist ein nicht in einer Leimpresse oder in einer Beschichtungsvorrichtung behandeltes Streichrohpapier zu verstehen. Für die Erfindung sind im gleichen Maße Folien beispielsweise aus Polyolefin und mit Polyolefin beschichtete Papiere als Substrat möglich, ohne dass eine solche Ausführung ausschließenden Charakter aufweist.

Um das Produkt für den Endverbraucher hochwertiger erscheinen zulassen, werden in vermehrter Weise von wärmeempfindlichen Aufzeichnungsmaterialien und hier insbesondere von Etiketten glänzende Oberflächen gefordert. Dabei liegt der Glanz bevorzugt in einem Bereich von 70 bis 80 %, gemessen entsprechend den Vorgaben der ISO 8254, Teil 1. Es ist bevorzugt, das erfindungsgemäße Aufzeichnungsmaterial insbesondere bei einer beabsichtigten Verwendung als Etikett zusätzlich mit einem auf die Schutzschicht aufgedruckten Glanzlack zu versehen, der einen Glanz im oben genannten Bereich von 70 bis 80 % (ISO 8254, Teil 1) aufweist. In einem solchen Fall wird bevorzugt in einer Flexodruckmaschine in deren ersten Druckwerken die gegebenenfalls mehrlagige Schutzschicht und die mindestens eine pigmenthaltige Druckschicht ausgebildet, während im gleichen Arbeitsgang auch der Glanzlack - beispielsweise mit dem letzten Druckwerk der Flexodruckmaschine - mit aufgebracht wird.

In einer besonderen Ausführungsform wird das erfindungsgemäße wärmeempfindliche Aufzeichnungsmaterial als Etikett mit rückseitiger (Selbst)Klebeschicht ausgerüstet. Je nach Bedarf kann die Klebeschicht mit einem Releasematerial wie beispielsweise einem silikonhaltigen Releasepapier abgedeckt sein oder die äußere Schutz- bzw. Glanzschicht des erfindungsgemäßen Aufzeichnungsmaterials wird mit einer zusätzlichen Releaseschicht versehen, die bevorzugt aufgedruckt ist - idealerweise mittels Flexodruck. Die Releaseschicht weist dabei Trennmittel auf Basis von Silikonöl und/oder Silikonfett auf. Durch die Ausführung der, das Aufzeichnungsmaterial auf seiner ersten Seite abschließenden Releaseschicht mit Silikonöl und/oder Silikonfett kann das vorgeschlagene Aufzeichnungsmaterial mit rückseitiger Selbstklebeschicht ohne Releasepapier in einer Rolle aufgewickelt werden, so dass in der Rolle die Selbstklebeschicht und die Releaseschicht in Kontakt kommen, ohne dass es zu einer dauerhaften Verklebung kommt.

In einer besonders bevorzugten Ausführungsform ist die Releaseschicht unter dem Einfluss von energiereicher Strahlung, wie beispielsweise UV- oder Elektronenstrahlung, härt- bzw. vernetzbar. Sofern die Releaseschicht mittels UV-Strahlen gehärtet werden soll, müssen die zur Herstellung dieser Schicht verwendeten Monomere bzw. Prepolymere in bekannter Weise Zusätze von Photoinitiatoren enthalten. Durch Elektronenstrahlhärtung konnte eine über ihren Querschnitt besonders gleichmäßig ausgebildete, d. h. ausgehärtete, Releaseschicht erzielt werden.

Die vorliegende Erfindung beansprucht auch die Verwendung des vorgeschlagenen wärmeempfindlichen Aufzeichnungsmaterials als Etikett speziell zur Auszeichnung von Lebensmitteln allgemein, Kühlthekenprodukten und insbesondere Tiefkühlprodukten. Zu diesem Zweck muss das erfindungsgemäße Aufzeichnungsmaterial über eine besonders weit gehende Umweltbeständigkeit insbesondere gegenüber Wasser verfügen.

Die in Beschreibung und Patentansprüchen gemachten Angaben zur flächenbezogenen Masse, zu Gew.% (Gewichts-%) und zu Gew.-Teilen (Gewichts-Teilen) beziehen sich jeweils auf das "atro"-Gewicht, d.h. absolut trockene Gewichtsteile. In den Ausführungen zu den organischen Pigmenten der pigmenthaltigen Zwischenschicht sind die diesbezüglichen Zahlenangaben berechnet aus dem "lutro"-Gewicht, d.h. lufttrockene Gewichtsteile, abzüglich des Gewichtsanteils von Wasser um und im Inneren der Pigmente in ihrer Lieferform.

Das nachfolgende Beispiel soll die Erfindung verdeutlichen:

Auf einer Langsieb-Papiermaschine wird als Substrat eine Papierbahn aus gebleichten und gemahlenen Laub- und Nadelholzzellstoffen mit einer flächenbezogenen Masse von 67 g/m² unter Zusatz üblicher Beischlagstoffe in üblichen Mengen hergestellt. Frontseitig wird mit einem Streichmesser eine hauptsächlich
- Styrolbutadienlatex als Bindemittel,
- Stärke als Cobinder und
- eine Pigmentmischung aus einem organischen Hohlraumpigment mit Polystyrolwandung und aus kalziniertem Kaolin
aufweisende Zwischenschicht von 8 g/m² aufgebracht. Auf die unter Wärmezufuhr konventionell getrocknete Zwischenschicht werden in dieser Reihenfolge mittels Rollrakel eine Farbbildner und Farbakzeptoren enthaltende wärmeempfindliche Aufzeichnungsschicht mit einer flächenbezogenen Masse von 4,5 g/m² sowie nach deren Trocknung im Flexodruckverfahren eine Text darstellende Druckschicht mit Azopigmenten und eine unter UV-Strahlung vernetzbare, die unter ihr liegende Druckschicht und die Aufzeichnungsschicht vollflächig abdeckende Schutzschicht von 2 g/m² aufgetragen. Dabei wird eine Zusammensetzung genutzt, die zuvor nach folgender Rezeptur erstellt wurde:

40 Gew.-% Dipentaerythritolpentaacrylat werden mit 40 Gew.% niedrigviskosem aminmodifizierten Polyetheracrylat sowie einer Kombination von 10 Gew.-% Benzphenonderivat und 8,5 Gew.-% Hydroxyzyklohexylphenylketon miteinander gemischt. Dieser Mischung werden 1,5 Gew.-% PTFE-modifiziertes Polyethylenwachs zugesetzt und homogen miteinander vermischt. Es resultiert eine reaktivverdünnerFreie Zusammensetzung mit niedrigem Restacrylsäuregehalt. Nach dem Druckauftrag der Zusammensetzung wird diese mittels UV-Punktstrahler vernetzt.

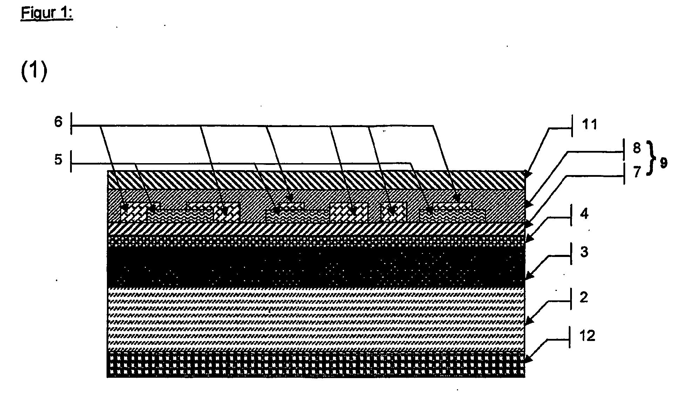

Die Erfindung soll anhand der folgenden Figur 1 weiter veranschaulicht werden:
Eine beanspruchte Ausführungsform des erfindungsgemäßen wärmeempfindlichen Aufzeichnungsmaterials (1) sieht ein Substrat (2) hier aus einem unbeschichteten Papier vor. Auf einer ersten Seite des Substrats (2) sind in dieser Reihenfolge aufgetragen:
   - eine das Substrat (2) vollflächig abdeckende pigmenthaltige Zwischenschicht (3), welche mittels eines Rollrakel-Auftragswerk aufgestrichen wurde;
   - eine mittels Rollrakel-Auftragswerk vollflächig aufgetragene wärmeempfindliche Aufzeichnungsschicht (4);
   - eine die wärmeempfindliche Aufzeichnungsschicht (4) vollflächig abdeckende erste Auftragsebene (7) einer Schutzschicht (9), die mittels Druckwerk einer Flexodruckmaschine aufgebracht und mittels UV-Strahlung vernetzt wurde;
   - eine erste mittels Flexodruckmaschine aufgebrachte pigmenthaltige Druckschicht (5) mit farblosen fluoreszierenden Pigmenten hier zur Ausbildung eines Sicherheitslogos in Form eines Schriftzuges;
   - eine zweite mittels Flexodruckmaschine aufgebrachte pigmenthaltige Druckschicht (6) mit farbigen Pigmenten zur Ausbildung eines farbigen Informationstextes hier in Form eines einzulösenden Gutscheins;
   - eine die vorherigen Druckschichten (5, 6) vollflächig abdeckende zweite Auftragsebene (8) der Schutzschicht (9), die mittels Druckwerk einer Flexodruckmaschine aufgebracht und mittels UV- Strahlung vernetzt wurde;
   - eine vollflächig abdeckende Releaseschicht (11) mit Trennmitteln auf der Basis von Silikonöl und Silikonfett, die mittels Druckwerk einer Flexodruckmaschine aufgebracht und mittels UV- Strahlung vernetzt wurde.
Auf einer der ersten Seite des Substrats (2) gegenüberliegenden zweiten Seite des Substrats (2) ist eine Selbstklebeschicht (12) aufgetragen.

## Patentansprüche

1. Wärmeempfindliches Aufzeichnungsmaterial (1) mit
- einem Substrat (2), das eine erste Seite und eine ihr gegenüberliegende zweite Seite aufweist,
- einer auf der ersten Seite des Substrats (2) gelegenen wärmeempfindlichen Aufzeichnungsschicht (4), die mindestens einen Farbstoffvorläufer und mindestens einen Farbakzeptor aufweist, wobei Farbstoffvorläufer und Farbakzeptor unter Einwirkung von Wärme farbbildend miteinander reagieren,
- einer die Aufzeichnungsschicht (4) abdeckenden, aufgedruckten, vernetzbaren und unter Einfluss von energiereicher Strahlung vernetzten Schutzschicht (9) auf der Basis von (Meth)acrylaten,
**dadurch gekennzeichnet, dass**
- die Schutzschicht (9)
■ zu 65 bis 95 Gew.-% ein oder mehrere (Meth)acrylate, ausgewählt aus der Gruppe umfassend Polyether(meth)acrylat, Epoxy(meth)acrylat sowie Urethan(meth)acrylat,
■ zu 0 bis 20 Gew.-% Photoinitiatoren und
■ zu 0,5 bis 20 Gew.-% Wachs
enthält, wobei mindestens ein (Meth)acrylat der genannten Gruppe ein aminmodifiziertes (Meth)acrylat ist und wobei sich die Gew.-%-Angaben zu 65,5 bis 100 Gew.-% der Schutzschicht (9) addieren,
- die Schutzschicht (9) aus einer nicht wässerigen Phase aufgedruckt ist,
- zwischen der Aufzeichnungsschicht (4) und der Schutzschicht (9) und/oder bei einer mehrlagig ausgeführten Schutzschicht (9) zwischen den mindestens zwei Lagen der Schutzschicht (9) mindestens eine pigmenthaltige Druckschicht (5, 6) aufgetragen ist.

2. Nicht wässerige Zusammensetzung für eine auf eine wärmeempfindliche Aufzeichnungsschicht aufdruckbare und durch energiereiche Strahlung vernetzbare Schutzschicht,
**dadurch gekennzeichnet, dass** die Zusammensetzung
- 65 bis 95 Gew.-% ein oder mehrere (Meth)acrylate ausgewählt aus der Gruppe umfassend: Polyether(meth)acrylat, Epoxy(meth)acrylat und Urethan(meth)acrylat,
- 0 bis 20 Gew.-% Photoinitiatoren und
- 0,5 bis 20 Gew.-% Wachs
enthält, wobei mindestens ein (Meth)acrylat der genannten Gruppe ein aminmodifiziertes (Meth)acrylat ist und wobei sich die Gew.-%-Angaben zu 65,5 bis 100 Gew.-% der Zusammensetzung addieren.

3. Zusammensetzung nach Anspruch 2, **dadurch gekennzeichnet, dass** die energiereiche Strahlung zur Vernetzung der Schutzschicht UV-Strahlung ist und die Zusammensetzung 2 bis 20 Gew.-% Photoinitiatoren enthält.

4. Zusammensetzung nach einem der Ansprüche 2 und 3, **dadurch gekennzeichnet, dass** die Zusammensetzung mittels Analogdruck auf die wärmeempfindliche Aufzeichnungsschicht aufdruckbar ist.

5. Wärmeempfindliches Aufzeichnungsmaterial nach Anspruch 1, **dadurch gekennzeichnet, dass** die energiereiche Strahlung zur Vernetzung der Schutzschicht (9) UV-Strahlung ist und die Schutzschicht (9) zu 2 bis 20 Gew.-% Photoinitiatoren enthält.

6. Wärmeempfindliches Aufzeichnungsmaterial nach einem der Ansprüche 1 und 5, **dadurch gekennzeichnet, dass** die Schutzschicht (9) mittels Analogdruck aufgedruckt ist.

7. Wärmeempfindliches Aufzeichnungsmaterial nach einem der Ansprüche 1, 5 und 6, **dadurch gekennzeichnet, dass** die Schutzschicht (9) aus mindestens einer ersten der Aufzeichnungsschicht (4) zugewandten ersten Auftragsebene (7) und aus einer zweiten der Aufzeichnungsschicht (4) abgewandten und die erste Auf tragsebene (7) zumindest teilweise überdeckenden zweiten Auftragsebene (8) besteht.

8. Wärmeempfindliches Aufzeichnungsmaterial nach Anspruch 7, **dadurch gekennzeichnet, dass** mindestens eine Auftragsebene (7, 8) der Schutzschicht (9) die wärmeempfindliche Aufzeichnungsschicht (4) vollflächig abdeckt.

9. Wärmeempfindliches Aufzeichnungsmaterial nach einem der Ansprüche 1 und 5 bis 8, **dadurch gekennzeichnet, dass** zwischen dem Substrat (2) und der Aufzeichnungsschicht (4) eine pigmenthaltige Zwischenschicht (3) ausgebildet ist.

10. Wärmeempfindliches Aufzeichnungsmaterial nach einem der Ansprüche 1 und 5 bis 9, **dadurch gekennzeichnet, dass** die mindestens eine pigmenthaltige Druckschicht (5) farblose und unter UV-Licht fluoreszierende Pigmente als authentifikationsnachweisendes Sicherheitsmerkmal enthält.

11. Wärmeempfindliches Aufzeichnungsmaterial nach einem der Ansprüche 1 und 5 bis 10, **dadurch gekennzeichnet, dass** die mindestens eine pigmenthaltige Druckschicht (6) farbige Pigmente zur Informationswiedergabe enthält.

12. Wärmeempfindliches Aufzeichnungsmaterial nach einem der Ansprüche 1 und 5 bis 11, **dadurch gekennzeichnet, dass** auf die Schutzschicht (9) ein Glanzlack aufgedruckt ist.

13. Wärmeempfindliches Aufzeichnungsmaterial nach einem der Ansprüche 1 und 5 bis 11, **dadurch gekennzeichnet, dass**
- auf der zweiten Seite des Substrates (2) eine Selbstklebeschicht (12) aufgebracht ist und
- auf die Schutzschicht (9) eine Releaseschicht (11) aufgedruckt ist.

14. Wärmeempfindliches Aufzeichnungsmaterial nach Anspruch 13, **dadurch gekennzeichnet, dass** die Releaseschicht (11) unter Einfluss von energiereicher Strahlung vernetzbar ist.

15. Wärmeempfindliches Aufzeichnungsmaterial nach einem der Ansprüche 13 und 14, **dadurch gekennzeichnet, dass** die Releaseschicht (11) Trennmittel auf der Basis von Silikonöl und/oder Silikonfett enthält.

16. Verwendung eines wärmeempfindlichen Aufzeichnungsmaterials nach einem der Ansprüche 1 und 5 bis 15 als Etikett.

## Claims

1. Heat-sensitive recording material (1) having
- a substrate (2), which has a first side and a second side lying opposite thereto,
- a heat-sensitive recording layer (4) applied to the first side of the substrate (2), which layer has at least one colour precursor and at least one colour acceptor, colour precursor and colour acceptor reacting with one another under the action of heat to form colour,
- a cross-linkable (meth)acrylate-based protective layer (9) which is imprinted onto and covers the recording layer (4) and is crosslinked under the effect of high-energy radiation,
**characterised in that**
- the protective layer (9) contains
■ from 65 to 95 % by weight of one or more (meth)acrylates selected from the group consisting of polyether (meth)acrylate, epoxy (meth)acrylate and urethane (meth)acrylate,
■ from 0 to 20 % by weight photoinitiators and
■ from 0.5 to 20 % by weight wax,
at least one (meth)acrylate of the said group being an amine-modified (meth)acrylate and the % by weight data adding up to from 65.5 to 100 % by weight of the protective layer (9),
- the protective layer (9) is imprinted from a non-aqueous phase,
- between the recording layer (4) and the protective layer (9) and/or, in the case of a protective layer (9) having a multi-ply arrangement, between the at least two plies of the protective layer (9), there is applied at least one pigment-containing print layer (5, 6).

2. Non-aqueous composition for a protective layer imprintable onto a heat-sensitive recording layer and crosslinkable by high-energy radiation,
**characterised in that** the composition contains
- from 65 to 95 % by weight of one or more (meth)acrylates selected from the group consisting of polyether (meth)acrylate, epoxy (meth)acrylate and urethane (meth)acrylate,
- from 0 to 20 % by weight photoinitiators and
- from 0.5 to 20 % by weight wax,
at least one (meth)acrylate of the said group being an amine-modified (meth)acrylate and the % by weight data adding up to from 65.5 % to 100 % by weight of the composition.

3. Composition according to claim 2, **characterised in that** the high-energy radiation for crosslinking the protective layer is UV radiation, and the composition contains from 2 to 20 % by weight photoinitiators.

4. Composition according to any one of claims 2 and 3, **characterised in that** the composition is imprintable onto the heat-sensitive recording layer by means of analogue printing.

5. Heat-sensitive recording material according to claim 1, **characterised in that** the high-energy radiation for crosslinking the protective layer (9) is UV radiation and the protective layer (9) contains from 2 to 20 % by weight photoinitiators.

6. Heat-sensitive recording material according to any one of claims 1 and 5, **characterised in that** the protective layer (9) is imprinted by means of analogue printing.

7. Heat-sensitive recording material according to any one of claims 1, 5 and 6, **characterised in that** the protective layer (9) consists of at least a first coating stratum (7) facing the recording layer (4) and of a second coating stratum (8) remote from the recording layer (4) and at least partially covering over the first coating stratum (7).

8. Heat-sensitive recording material according to claim 7, **characterised in that** at least one coating stratum (7, 8) of the protective layer (9) covers the entire surface of the heat-sensitive recording layer (4).

9. Heat-sensitive recording material according to any one of claims 1 and 5 to 8,
**characterised in that** a pigment-containing intermediate layer (3) is arranged between the substrate (2) and the recording layer (4).

10. Heat-sensitive recording material according to any one of claims 1 and 5 to 9,
**characterised in that** the at least one pigment-containing print layer (5) contains colourless pigments that fluoresce under UV light as a security feature proving authenticity.

11. Heat-sensitive recording material according to any one of claims 1 and 5 to 10,
**characterised in that** the at least one pigment-containing print layer (6) contains coloured pigments for information reproduction.

12. Heat-sensitive recording material according to any one of claims 1 and 5 to 11,
**characterised in that** a gloss coating is imprinted onto the protective layer (9).

13. Heat-sensitive recording material according to any one of claims 1 and 5 to 11,
**characterised in that**
- a self-adhesive layer (12) is applied to the second side of the substrate (2),
- a release layer (11) is imprinted onto the protective layer (9).

14. Heat-sensitive recording material according to claim 13, **characterised in that** the release layer is crosslinkable under the effect of high-energy radiation.

15. Heat-sensitive recording material according to any one of claims 13 and 14, **characterised in that** the release layer (11) contains release agents based on silicone oil and/or silicone grease.

16. Use of a heat-sensitive recording material according to any one of claims 1 and 5 to 15 as a label.

## Revendications

1. Matériau d'enregistrement thermosensible (1) avec
- un substrat (2), qui présente une première face et une deuxième face opposée,
- une couche d'enregistrement thermosensible (4) déposée sur la première face du substrat (2), qui présente au moins un précurseur de colorant et au moins un accepteur de couleur, où le précurseur de colorant et l'accepteur de couleur réagissent l'un avec l'autre pour former une couleur, sous l'action de la chaleur,
- une couche protectrice (9) couvrant la couche d'enregistrement (4), réticulable et réticulée sous l'influence d'un rayonnement énergétique, à base de (méth)acrylates,
**caractérisé en ce que**
- la couche protectrice (9) contient
* 65 à 95% en poids d'un ou de plusieurs (méth)acrylates, choisis parmi le groupe comprenant les (méth)acrylates de polyéther, époxy(méth)acrylates et les (méth)acrylates d'uréthanne,
* 0 à 20% en poids de photoinitiateurs, et
* 0,5 à 20% en poids de cire,
où au moins un (méth)acrylate du groupe précité est un (méth)acrylate modifié par une amine et où les valeurs données en % en poids s'additionnent pour faire 65,5 à 100% en poids de la couche protectrice (9),
- la couche protectrice (9) est appliquée à partir d'une phase non aqueuse,
- entre la couche d'enregistrement (4) et la couche protectrice (9) et/ou en cas de couche protectrice (9) multicouche, entre les au moins deux couches de couche protectrice (9), on applique au moins une couche d'impression (5, 6) contenant un pigment.

2. Composition non aqueuse pour une couche protectrice applicable sur une couche d'enregistrement thermosensible et réticulable par un rayonnement énergétique,
**caractérisée en ce que** la composition contient
- 65 à 95% en poids d'un ou de plusieurs (méth)acrylates, choisis parmi le groupe comprenant les (méth)acrylates de polyéther, époxy(méth)acrylates et les (méth)acrylates d'uréthanne,
- 0 à 20% en poids de photoinitiateurs, et
- 0,5 à 20% en poids de cire,
où au moins un (méth)acrylate du groupe précité est un (méth)acrylate modifié par une amine et où les valeurs données en % en poids s'additionnent pour faire 65,5 à 100% en poids de la composition.

3. Composition selon la revendication 2, **caractérisée en ce que** le rayonnement énergétique pour la réticulation de la couche protectrice est un rayonnement UV et **en ce que** la composition contient 2 à 20% en poids de photoinitiateur.

4. Composition selon l'une des revendications 2 et 3, **caractérisée en ce que** la composition est applicable par impression analogique sur la couche d'enregistrement thermosensible.

5. Matériau d'enregistrement thermosensible selon la revendication 1, **caractérisé en ce que** le rayonnement énergétique pour la réticulation de la couche protectrice (9) est un rayonnement UV et **en ce que** la couche protectrice (9) contient 2 à 20% en poids de photoinitiateur.

6. Matériau d'enregistrement thermosensible selon l'une des revendications 1 et 5,
**caractérisé en ce que** la couche protectrice (9) est appliquée par impression analogique.

7. Matériau d'enregistrement thermosensible selon l'une des revendications 1, 5 et 6,
**caractérisé en ce que** la couche protectrice (9) comporte en au moins un premier plan d'application (7), orienté vers la couche d'enregistrement (4) et un deuxième plan d'application (8), éloigné de la couche d'enregistrement (4) et couvrant au moins partiellement le premier plan d'application (7).

8. Matériau d'enregistrement thermosensible selon la revendication 7, **caractérisé en ce qu'**au moins un des plans d'application (7, 8) de la couche protectrice (9) couvre toute la surface de la couche d'enregistrement thermosensible (4).

9. Matériau d'enregistrement thermosensible selon l'une des revendications 1, 5 à 8, **caractérisé en ce qu'**entre le substrat (2) et la couche d'enregistrement (4), est formée une couche intermédiaire pigmentée.

10. Matériau d'enregistrement thermosensible selon l'une des revendications 1, 5 à 9, **caractérisé en ce que** la (ou les) couche d'impression pigmentée (5) contient des pigments incolores et fluorescents sous la lumière UV comme caractéristique de sécurité pour authentification.

11. Matériau d'enregistrement thermosensible selon l'une des revendications 1, 5 à 10, **caractérisé en ce que** la (ou les) couche d'impression pigmentée (6) contient des pigments colorés pour le rendu de l'information.

12. Matériau d'enregistrement thermosensible selon l'une des revendications 1, 5 à 11, **caractérisé en ce que** sur la couche protectrice (9), est appliquée une laque de brillance.

13. Matériau d'enregistrement thermosensible selon l'une des revendications 1, 5 à 11, **caractérisé en ce que**
- sur la deuxième face du substrat (2), est appliquée une couche auto-collante (12), t
- sur la couche protectrice (9), est appliquée une couche de libération (11).

14. Matériau d'enregistrement thermosensible selon la revendication 13, **caractérisé en ce que** la couche de libération (11) est réticulable sous l'influence d'un rayonnement énergétique.

15. Matériau d'enregistrement thermosensible selon l'une des revendications 13 et 14, **caractérisé en ce que** la couche de libération (11) contient un agent de séparation à base d'huile de silicone et/ou de graisse de silicone.

16. Utilisation d'un matériau d'enregistrement thermosensible selon l'une des revendications 1 et 5 à 15, comme étiquette.
